# EUROPÄISCHE PATENTSCHRIFT

(11) **EP 2 926 021 B1**
(45) Veröffentlichungstag und Bekanntmachung des Hinweises auf die Patenterteilung: **20.06.2018**
(21) Anmeldenummer: 13802238.9
(22) Anmeldetag: 25.11.2013
(51) Int. Cl.: F16D 55/36

(54) **BREMSANORDNUNG UND ELEKTROMOTOR**
BRAKE ARRANGEMENT AND ELECTRIC MOTOR
SYSTÈME DE FREINAGE ET MOTEUR ÉLECTRIQUE

(30) Priorität: 28.11.2012 DE 102012023167
(43) Veröffentlichungstag der Anmeldung: 07.10.2015
(73) Patentinhaber: Sew-Eurodrive GmbH & Co. KG, 76646 Bruchsal (DE)
(72) Erfinder: FICHTNER-PFLAUM, Gerolf, 76703 Kraichtal-Unteröwisheim (DE); FLÖRCHINGER, Gerhard, 67376 Harthausen (DE); HUCK, Barbara, 76646 Bruchsal (DE)
(86) Internationale Anmeldenummer: PCT/EP2013/003550
(87) Internationale Veröffentlichungsnummer: WO 2014/082725

(56) Entgegenhaltungen:
- DE-A1- 19 902 195
- DE-A1-102010 049 744
- DE-A1-102011 016 892
- US-B1- 6 179 090
- US-B1- 6 374 953

## Beschreibung

Die Erfindung betrifft eine Bremsanordnung und einen Elektromotor.

Aus der DE 196 22 983 C1 ist eine elektromagnetisch betätigte Bremse für einen Motor bekannt.

**Die** DE 199 02 195 A1 offenbart eine elektromagnetische Federdruckbremse mit einer Handlüfteinrichtung.

Die US 6 374 953 B1 zeigt eine Handsteuerung für eine Kolbenbremse eines Fahrstuhls.

Aus der DE 10 2010 049 744 A1 ist eine vorkomplettierte Federdruckbremse bekannt.

Die US 6 179 090 B1 offenbart eine Handsteuerung für eine Trommelbremse eines Fahrstuhls.

Die DE 10 2011 016 892 A1 zeigt eine elektromagnetische Federdruckbremse mit einer Arretierungseinrichtung.

Der Erfindung liegt daher die Aufgabe zugrunde, eine Bremsanordnung weiterzubilden, wobei die Sicherheit verbessert werden soll.

Erfindungsgemäß wird die Aufgabe bei der Bremsanordnung nach den in Anspruch 1 und bei dem Elektromotor nach den in Anspruch 15 angegebenen Merkmalen gelöst.

Wichtige Merkmale der Erfindung bei der Bremsanordnung, insbesondere für einen Elektromotor mit einer Rotorwelle, wobei die Bremsanordnung eine Ankerscheibe aufweist, sind, dass die Bremsanordnung einen Bremshebel aufweist, insbesondere zur manuellen Belüftung einer Bremse, wobei der Bremshebel einen ersten und einen zweiten Hebelabschnitt aufweist, insbesondere aus einem ersten und einen zweiten Hebelabschnitt zusammengesetzt ist.

Von Vorteil ist dabei, dass die manuelle Belüftung der Bremse, die Wartung und Prüfung der Bremse erleichtert.

Die Ausführung des Bremshebels mit zwei Hebelabschnitten reduziert die aufzubringende Kraft des Bedieners bei der manuellen Belüftung der Bremse. Mittels des Doppelhebels ist außerdem die Länge des Hebelarms reduzierbar. Somit ist also der Bremshebel kompakt ausführbar.

Bei einer vorteilhaften Ausgestaltung sind der erste Hebelabschnitt und der zweite Hebelabschnitt drehbar zueinander angeordnet, insbesondere wobei der erste Hebelabschnitt am zweiten Hebelabschnitt drehbar gelagert ist. Von Vorteil ist dabei, dass der Bremshebel kompakt ausführbar ist.

Bei einer vorteilhaften Ausgestaltung ist zwischen dem ersten Hebelabschnitt und dem zweiten Hebelabschnitt ein Drehlager, insbesondere umfassend einen Stift, zwischengeordnet. Von Vorteil ist dabei, dass die Lagerung der zwei Hebelabschnitte verschleißarm ist. Das Drehlager ermöglicht eine Drehung um eine einzige Drehachse, wodurch das Drehlager besonders langlebig ist und großen Kräften aussetzbar ist.

Bei einer vorteilhaften Ausgestaltung sind der erste Hebelabschnitt und der zweite Hebelabschnitt gleitgelagert am Stift. Von Vorteil ist dabei, dass eine Gleitlagerung in einfacher Art und Weise ausführbar ist und eine geringe Störanfälligkeit aufweist. Somit ist die Sicherheit verbessert. Erfindungsgemäß ist am zweiten Hebelabschnitt eine Rolle drehbar gelagert. Von Vorteil ist dabei, dass der Bremshebel kompakt ausführbar ist. Mittels der Rolle ist der Kraftfluss vom ersten zum zweiten Hebelabschnitt umlenkbar, wobei der für den Bremshebel benötigte Bauraum klein ist. Die erfindungsgemäße Rollenlagerung ist in einfacher Weise robust und langlebig ausführbar. Somit ist die Sicherheit verbessert.

Bei einer vorteilhaften Ausgestaltung weist die Bremse, insbesondere ein Magnetkörper der Bremse, einen Oberflächenabschnitt, insbesondere eine axiale Seitenfläche auf, der als Rollfläche für die Rolle geeignet ist, wobei die Rolle einen Bereich der Rollfläche berührt. Von Vorteil ist dabei, dass die Rollfläche die Bewegung der Rolle in axialer Richtung begrenzt. Die Rolle rollt auf der Rollfläche ab und definiert so die Position des Bremshebels.

Bei einer vorteilhaften Ausgestaltung berührt der erste Hebelabschnitt die Oberfläche der Bremse, insbesondere die axiale Seitenfläche der Bremse, insbesondere des Magnetkörpers der Bremse, so dass ein Auflager für den ersten Hebelabschnitt an der Bremse ausgebildet ist. Von Vorteil ist dabei, dass das Auflager als Drehpunkt für den Bremshebel fungiert. Dabei ist die Bremsanordnung kompakt ausführbar.

Bei einer vorteilhaften Ausgestaltung greift als Auflager ein am Magnetkörper ausgeformter Vorsprung in eine entsprechende Vertiefung des ersten Hebelabschnitts ein. Von Vorteil ist dabei, dass das Auflager in einfacher Art und Weise fertigbar ist. Dabei ist das Auflager kompakt und stabil ausführbar.

Bei einer vorteilhaften Ausgestaltung ist das Auflager einstückig mit dem Magnetkörper ausgeführt. Von Vorteil ist dabei, dass das Auflager kostengünstig fertigbar ist. Vorteilhafterweise ist das einstückig mit dem Magnetkörper ausgeführte Auflager stabiler als ein separates Auflager, das an seiner Verbindungsfläche zum Magnetkörper eine Sollbruchstelle aufweist.

Bei einer vorteilhaften Ausgestaltung ist die Rollfläche durch zumindest ein Begrenzungsmittel begrenzt, insbesondere zur Begrenzung der radialen Bewegung der Rolle. Von Vorteil ist dabei, dass die Rolle nur in einem begrenzten Bereich bewegbar ist. Somit ist eine Fehlfunktion des Bremshebels verhinderbar und die Sicherheit des Bremshebels verbessert.

Bei einer vorteilhaften Ausgestaltung ist das Begrenzungsmittel einstückig ausgeformt am Magnetkörper. Von Vorteil ist dabei, dass das Begrenzungsmittel kostengünstig und kompakt fertigbar ist.

Bei einer vorteilhaften Ausgestaltung ist zumindest ein Bolzen verbunden mit einer Ankerscheibe, insbesondere schraubverbunden, wobei der Bolzen den Abstand der Ankerscheibe zum Magnetkörper mittels eines Begrenzungselementes begrenzt und mit dem Begrenzungselement verbunden, insbesondere schraubverbunden, ist, wobei der Bolzen durch eine durchgehende, insbesondere axiale, erste Bohrung im ersten Hebelabschnitt hindurchgeführt ist. Von Vorteil ist dabei, dass die Ankerscheibe mittels des Bremshebels auslenkbar ist. Bei der Wartung der Bremse, ist eine manuelle Auslenkung der Ankerscheibe vorteilhaft um die Funktionalität der Bremse zu überprüfen. Somit ist die Bremskraft der Bremse überprüfbar, sollte die Bremskraft nachlassen, ist die Bremse nachjustierbar und daher ist die Sicherheit der Bremse verbessert.

Bei einer vorteilhaften Ausgestaltung ist das Begrenzungselement auf der von der Ankerscheibe abgewandten Seite des ersten Hebelabschnitts angeordnet. Von Vorteil ist dabei, dass das Begrenzungselement je nach Hebelstellung des Bremshebels die Ankerscheibe mit dem ersten Hebelabschnitt koppelt. Bei geschlossenem Bremshebel ist das Begrenzungselement von dem ersten Hebelabschnitt beabstandet, so dass die Ankerscheibe in axialer Richtung von dem Begrenzungselement unbegrenzt bewegbar ist. Bei geöffnetem Bremshebel wird der erste Hebelabschnitt gegen das Begrenzungselement gedrückt und drückt dadurch die Ankerscheibe gegen den Magnetkörper, so dass die Bremse gelüftet ist.

Bei einer vorteilhaften Ausgestaltung weist das Begrenzungselement einen größeren Außendurchmesser als die erste Bohrung auf. Von Vorteil ist dabei, dass die erste Bohrung das Begrenzungselement in axialer Richtung begrenzt. Somit ist eine Begrenzung des Abstandes der Ankerscheibe zum Magnetkörper in einfacher Weise ausführbar.

Bei einer vorteilhaften Ausgestaltung ist der Bolzen durch eine durchgehende, insbesondere axiale, Durchgangsbohrung im Magnetkörper hindurchgeführt. Von Vorteil ist dabei, dass die Bremse kompakt ausführbar ist. Dabei ist der Bolzen geführt von der Durchgangsbohrung im Magnetkörper.

Bei einer vorteilhaften Ausgestaltung ist der Magnetkörper zwischen der Ankerscheibe und dem ersten Hebelabschnitt angeordnet. Von Vorteil ist dabei, dass der Magnetkörper die Bewegung der Ankerscheibe in axialer Richtung begrenzt. Dabei ist die Ankerscheibe mittels des ersten Hebelabschnitts gegen den Magnetkörper drückbar.

Bei einer vorteilhaften Ausgestaltung ist zumindest ein weiterer Bolzen mit dem Magnetkörper verbunden, insbesondere schraubverbunden, wobei der Bolzen durch eine durchgehende, insbesondere axiale, zweite Bohrung im ersten Hebelabschnitt hindurchgeführt ist, wobei der Bolzen den Abstand des ersten Hebelabschnitts zum Magnetkörper mittels eines Begrenzungselementes und eines zwischen dem Begrenzungselement und dem ersten Hebelabschnitt angeordneten Federelementes begrenzt. Von Vorteil ist dabei, dass eine Rückstellkraft auf den ersten Hebelabschnitt wirkt, die axial in Richtung des Magnetkörpers gerichtet ist. Diese Rückstellkraft bewirkt einen geringen Abstand zwischen dem Magnetkörper und dem ersten Hebelabschnitt. Dabei wird auch der zweite Hebelabschnitt, der mit dem ersten Hebelabschnitts verbunden ist, gegen den Magnetkörper gedrückt. Somit ist die auf den ersten Hebelabschnitt wirkende Rückstellkraft unabhängig von der auf die Ankerscheibe wirkenden Federkraft, so dass diese Federkraft genau einstellbar ist, wodurch die Sicherheit der Bremse verbessert ist.

Bei einer vorteilhaften Ausgestaltung ist der erste Hebelabschnitt zwischen dem Magnetkörper und dem Federelement angeordnet. Von Vorteil ist dabei, dass die Federkraft des Federelements auf den ersten Hebelabschnitt wirkt. Diese Federkraft ist insbesondere einstellbar mittels des Begrenzungselementes, dessen axiale Position auf dem Bolzen einstellbar ist. Vorteilhafterweise drückt die Federkraft den Bremshebel in eine Ruheposition, in der die Ankerscheibe unabhängig vom Bremshebel bewegbar ist.

Bei einer vorteilhaften Ausgestaltung weist das Begrenzungselement einen größeren Außendurchmesser als das Federelement auf. Von Vorteil ist dabei, dass das Federelement in axialer Richtung begrenzt und abgestützt ist an dem Begrenzungselement. Somit ist eine Begrenzung des Abstandes des ersten Hebelabschnitts zum Magnetkörper in einfacher Weise ausführbar. Diese Begrenzung ist elastisch ausführbar, so dass der Bremshebel manuell auslenkbar ist relativ zur Federkraft.

Bei einer vorteilhaften Ausgestaltung weist das Federelement einen größeren Außendurchmesser als die zweite Bohrung auf. Von Vorteil ist dabei, dass das Federelement in axialer Richtung begrenzt und abgestützt ist an dem Magnetkörper.
Somit ist eine Begrenzung des Abstandes des ersten Hebelabschnitts zum Magnetkörper in einfacher Weise ausführbar.

Bei einer vorteilhaften Ausgestaltung weist die Bremsanordnung
- eine Spule, die in dem Magnetkörper aufgenommen ist,
- einen Bremsbelagträger, der mittels einer auf einer Welle, insbesondere auf der Rotorwelle des Elektromotors, angeordneten Mitnehmerverzahnung drehfest, insbesondere in Umfangsrichtung formschlüssig, und axial, insbesondere in Rotorachsrichtung, bewegbar angeordnet ist, insbesondere wobei hierzu der Bremsbelagträger eine entsprechende mit der Mitnehmerverzahnung im Eingriff stehende Innenverzahnung aufweist,
- und die drehfest mit dem Magnetkörper verbundene, aber axial bewegbar angeordnete Ankerscheibe, insbesondere wobei die Ankerscheibe von zumindest einem Führungsteil in Rotorwellenachsrichtung geführt ist,
auf. Von Vorteil ist dabei, dass der von der Spule und dem Magnetkörper gebildete Elektromagnet die Ankerscheibe anzieht, so dass die Ankerscheibe axial von dem Bremsbelagträger beabstandet ist. Der drehfest mit der Rotorwelle verbundene Bremsbelagträger dreht sich dabei mit der Rotorwelle mit. Bei bestromtem Elektromagnet ist die Bremse also gelüftet und die Rotorwelle des Elektromotors dreht ungebremst. Beim Einfallen der Bremse drückt die Ankerscheibe auf den Bremsbelagträger und bremst ihn, wodurch auch die mittels der Mitnehmerverzahnung mit dem Bremsbelagträger verbundene Rotorwelle gebremst wird.

Bei einer vorteilhaften Ausgestaltung ist die Ankerscheibe von zumindest einem Federteil beaufschlagt, insbesondere wobei das Federteil abgestützt ist am Magnetkörper. Von Vorteil ist dabei, dass das Federteil die Ankerscheibe gegen den Bremsbelagträger drückt, so dass beim Ausschalten oder Ausfall des Stromes durch die Spule, die Bremse einfällt und der Elektromotor abgebremst wird. Somit ist bei einem Stromausfall der Einfall der Bremse sichergestellt, so dass der Motor nicht unkontrolliert dreht. Die Betriebssicherheit ist also verbessert.

Bei einer vorteilhaften Ausgestaltung sind das oder die Führungsteile befestigt am Magnetkörper. Von Vorteil ist dabei, dass die Ankerscheibe drehfest angeordnet ist an dem Magnetkörper. Somit ist ein Mitdrehen der Ankerscheibe mit dem Bremsbelagträger verhinderbar und die Sicherheit der Bremse ist verbessert.

Bei einer vorteilhaften Ausgestaltung ist der Bremsbelagträger axial zwischen Ankerscheibe und einem eine Bremsfläche aufweisenden Teil angeordnet. Von Vorteil ist dabei, dass die Ankerscheibe beim Einfallen der Bremse den Bremsbelagträger auf die Bremsfläche drückt. Hierbei wird also der Bremsbelagträger doppelt gebremst, einmal an der Ankerscheibe und einmal an der Bremsfläche. Somit ist die Sicherheit der Bremse verbessert.

Bei einer vorteilhaften Ausgestaltung weist die Bremsanordnung eine weitere Ankerscheibe auf, wobei zumindest ein weiterer Bolzen verbunden ist mit der weiteren Ankerscheibe, insbesondere schraubverbunden, wobei der weitere Bolzen den Abstand der weiteren Ankerscheibe zu einem weiteren Magnetkörper mittels eines weiteren Begrenzungselementes begrenzt und mit dem weiteren Begrenzungselement verbunden, insbesondere schraubverbunden, ist, wobei der weitere Bolzen durch eine durchgehende, insbesondere axiale, dritte Bohrung im ersten Hebelabschnitt hindurchgeführt ist. Von Vorteil ist dabei, dass die zusätzliche Ankerscheibe eine größere Bremskraft ermöglicht als eine einzige Ankerscheibe. Die weitere Ankerscheibe ist mittels des Bremshebels gleichzeitig mit der Ankerscheibe manuell lüftbar.

Bei einer vorteilhaften Ausgestaltung ist das weitere Begrenzungselement auf der von der Ankerscheibe abgewandten Seite des ersten Hebelabschnitts angeordnet. Von Vorteil ist dabei, dass das Begrenzungselement je nach Hebelstellung des Bremshebels die weitere Ankerscheibe mit dem ersten Hebelabschnitt koppelt. Bei geschlossenem Bremshebel ist das Begrenzungselement von dem ersten Hebelabschnitt beabstandet, so dass die weitere Ankerscheibe in axialer Richtung von dem Begrenzungselement unbegrenzt bewegbar ist. Bei geöffnetem Bremshebel wird der erste Hebelabschnitt gegen das Begrenzungselement gedrückt und drückt dadurch die weitere Ankerscheibe gegen den Magnetkörper, so dass die Bremse gelüftet ist.

Bei einer vorteilhaften Ausgestaltung weist das weitere Begrenzungselement einen größeren Außendurchmesser als die dritte Bohrung auf. Von Vorteil ist dabei, dass das Begrenzungselement in axialer Richtung begrenzt ist von dem ersten Hebelabschnitt. Somit ist eine Begrenzung des Abstandes der weiteren Ankerscheibe zum weiteren Magnetkörper in einfacher Weise ausführbar.

Bei einer vorteilhaften Ausgestaltung ist der Bolzen durch eine durchgehende, insbesondere axiale, weitere Durchgangsbohrung im Magnetkörper hindurchgeführt. Von Vorteil ist dabei, dass die Bremse kompakt ausführbar ist. Dabei ist der Bolzen mittels der weiteren Durchgangsbohrung im Magnetkörper geführt.

Bei einer vorteilhaften Ausgestaltung ist der weitere Magnetkörper zwischen der weiteren Ankerscheibe und dem Bremsbelagträger angeordnet. Von Vorteil ist dabei, dass der weitere Magnetkörper als Bremsfläche aufweisendes Teil verwendbar ist. Somit ist die Zahl der Bauteile reduzierbar und die Bremse ist kostengünstig fertigbar.

Bei einer vorteilhaften Ausgestaltung ist der weitere Bolzen durch eine durchgehende, insbesondere axiale, Bohrung im weiteren Magnetkörper hindurchgeführt. Von Vorteil ist dabei, dass der weitere Magnetkörper zur Führung des mit der weiteren Ankerscheibe verbundenen weiteren Bolzens verwendbar ist.

Bei einer vorteilhaften Ausgestaltung ist der weitere Bolzen durch eine durchgehende, insbesondere axiale, Bohrung in der Ankerscheibe hindurchgeführt. Von Vorteil ist dabei, dass die Bremse kompakt ausführbar ist und der weitere Bolzen zur Führung der Ankerscheibe verwendbar ist.

Bei einer vorteilhaften Ausgestaltung ist ein äußerer maximaler Radius des Bremsbelagträgers kleiner als der radiale Abstand zwischen dem weiteren Bolzen und der Drehachse. Von Vorteil ist dabei, dass der Bremsbelagträger von dem weiteren Bolzen beabstandet ist. Bei einer Ausführung der Bremse mit mehreren in Umfangsrichtung gleichmäßig verteilten Bolzen, dreht der Bremsbelagträger also radial innerhalb der Bolzen. Somit ist die Bremse kompakt ausführbar.

Bei einer vorteilhaften Ausgestaltung weist die Bremsanordnung
- eine weitere Spule, die in einem weiteren Magnetkörper aufgenommen ist,
- einen weiteren Bremsbelagträger, der mittels einer auf einer Welle, insbesondere auf der Rotorwelle des Elektromotors, angeordneten weiteren Mitnehmerverzahnung drehfest, insbesondere in Umfangsrichtung formschlüssig, und axial, insbesondere in Rotorachsrichtung, bewegbar angeordnet ist,
- und die drehfest mit dem weiteren Magnetkörper verbundene, aber axial bewegbar angeordnete weitere Ankerscheibe, insbesondere von zumindest einem weiteren Führungsteil in Rotorwellenachsrichtung geführte weitere Ankerscheibe,
auf. Von Vorteil ist dabei, dass der von der weiteren Spule und dem weiteren Magnetkörper gebildete Elektromagnet die weitere Ankerscheibe anzieht, so dass die weitere Ankerscheibe axial von dem weiteren Bremsbelagträger beabstandet ist. Der drehfest mit der Rotorwelle verbundene weitere Bremsbelagträger dreht sich dabei mit der Rotorwelle mit. Bei bestromtem Elektromagnet ist die Bremse also gelüftet und die Rotorwelle des Elektromotors dreht ungebremst. Beim Einfallen der Bremse drückt die weitere Ankerscheibe auf den weiteren Bremsbelagträger und bremst ihn, wodurch auch die mittels der weiteren Mitnehmerverzahnung mit dem weiteren Bremsbelagträger verbundene Rotorwelle gebremst wird. Die Bremse ist also mit zwei Bremseinheiten ausführbar. Somit ist die Bremskraft erhöhbar. Zusätzlich ist die Bremse redundant ausgeführt, sollte eine Bremseinheit ausfallen, ist eine Notbremsung mit der anderen Bremseinheit möglich.

Bei einer vorteilhaften Ausgestaltung ist das die Bremsfläche aufweisende Teil der weitere Magnetkörper. Von Vorteil ist dabei, dass Bauteile einsparbar sind, somit ist die Bremse kostengünstig und kompakt ausführbar. Dadurch ist der Umweltschutz verbessert.

Bei einer vorteilhaften Ausgestaltung ist die weitere Ankerscheibe von zumindest einem weiteren Federteil beaufschlagt, insbesondere wobei das weitere Federteil abgestützt ist an dem weiteren Magnetkörper. Von Vorteil ist dabei, dass das weitere Federteil die weitere Ankerscheibe gegen den weiteren Bremsbelagträger drückt, so dass beim Ausschalten des Stromes durch die weitere Spule, die Bremse einfällt und der Elektromotor abgebremst wird.

Bei einer vorteilhaften Ausgestaltung sind das oder die weiteren Führungsteile befestigt an dem weiteren Magnetkörper. Von Vorteil ist dabei, dass die weitere Ankerscheibe drehfest angeordnet ist an dem weiteren Magnetkörper. Somit ist ein Mitdrehen der weiteren Ankerscheibe mit dem weiteren Bremsbelagträger verhinderbar und die Sicherheit der Bremse ist verbessert.

Bei einer vorteilhaften Ausgestaltung ist der weitere Bremsbelagträger axial zwischen einer weiteren Ankerscheibe und einem weiteren eine Bremsfläche aufweisenden Teil angeordnet. Von Vorteil ist dabei, dass die weitere Ankerscheibe beim Einfallen der Bremse den weiteren Bremsbelagträger auf das weitere eine Bremsfläche aufweisende Teil drückt. Hierbei wird also der weitere Bremsbelagträger doppelt gebremst, einmal an der weiteren Ankerscheibe und einmal an dem weiteren eine Bremsfläche aufweisenden Teil. Somit ist die Sicherheit der Bremse verbessert.

Bei einer vorteilhaften Ausgestaltung ist das weitere eine Bremsfläche aufweisende Teil als ein Gehäuseteil oder ein Lagerschild ausgeführt. Von Vorteil ist dabei, dass die Anzahl der Bauteile reduzierbar ist, die Bremse ist also kostengünstig und kompakt ausführbar.

Bei einer vorteilhaften Ausgestaltung weist der erste Hebelabschnitt zwei Auflager auf. Von Vorteil ist dabei, dass die auf die Auflager wirkende Kraft auf zwei Auflager verteilt wird. Dadurch wird die auf ein Auflager wirkende Kraft und somit die Belastung für das Material reduziert. Somit ist der Verschleiß am Bremshebel reduzierbar und die Sicherheit verbessert.

Bei einer vorteilhaften Ausgestaltung weist der erste Hebelabschnitt einen Verbindungsabschnitt und zwei Schenkelabschnitte auf. Von Vorteil ist dabei, dass radial zwischen den zwei Schenkelabschnitten die Welle hindurchführbar ist, so dass auf der von der Bremse abgewandten Seite des Bremshebels ein Lüfter oder ein Geber mit der Welle verbindbar ist.

Bei einer vorteilhaften Ausgestaltung ist die Rollfläche in Umfangsrichtung zwischen zwei Auflagern angeordnet. Von Vorteil ist dabei, dass ein möglichst langer Hebelarm für den Bremshebel verwendbar ist, somit ist die Hebelwirkung des Bremshebels verbessert.

Bei einer vorteilhaften Ausgestaltung sind die Auflager auf derselben axialen Position angeordnet. Von Vorteil ist dabei, dass die auf die Auflager wirkende Hebelkraft gleichmäßig auf beide Auflager verteilbar ist, so dass der Bremshebel gleichmäßig auslenkbar ist. Hierdurch ist der Verschleiß an der Bremsenanordnung reduzierbar und somit ist die Sicherheit verbessert.

Bei einer vorteilhaften Ausgestaltung ist die Rollfläche eben und/oder plan, insbesondere wobei die Normalenrichtung der Rollfläche zur Drehachse parallel ist. Von Vorteil ist dabei, dass die Rolle auf der Rollfläche gut abrollt und wenig verschleißt, somit ist die Sicherheit des Bremshebels verbessert.

Bei einer vorteilhaften Ausgestaltung weist jeder Schenkelabschnitt des ersten Hebelabschnitts zumindest eine erste Bohrung und eine zweite und/oder dritte Bohrung auf. Von Vorteil ist dabei, dass die Hebelkraft gleichmäßig auf beide Schenkel des ersten Hebelabschnitts verteilbar ist, so dass der Bremshebel gleichmäßig auslenkbar ist. Hierdurch ist der Verschleiß an der Bremsenanordnung reduzierbar und somit die Sicherheit verbessert.

Bei einer vorteilhaften Ausgestaltung berührt ein Flächenabschnitt, insbesondere der Unterseite, des Begrenzungselementes eine Berührfläche des ersten Hebelabschnitts bei einer ersten Hebelstellung, so dass Berührfläche und Flächenabschnitt parallel ausgerichtet sind, und wobei der Flächenabschnitt bei einer zweiten Hebelstellung von der Berührfläche beabstandet ist und um einen nichtverschwindenden Winkelwert gedreht ist zur Berührfläche, insbesondere wobei die Normale des Flächenabschnitts einen nichtverschwindenden Winkel zur Normalen der Berührfläche aufweist. Von Vorteil ist dabei, dass, bei der zweiten Hebelstellung, das Begrenzungselement von dem Bremshebel beabstandet ist, so dass die Ankerscheibe, die mit dem mit dem Begrenzungselement verbundenen Bolzen verbunden ist, in axialer Richtung beweglich ist. In der ersten Hebelstellung berührt das Begrenzungselement den ersten Hebelabschnitt flächig. Eine flächige Berührung ist vorteilhaft zur Kraftübertragung, da die Kraft sich gleichmäßig auf der Fläche verteilt, somit ist der Druck auf den ersten Hebelabschnitt und damit die Materialbelastung reduziert. Der Winkel zwischen der Normalen der Berührfläche und der Normalen des Flächenabschnitts verhindert eine Verformung des Bolzens beim Auslenken des Bremshebels.

Bei einer vorteilhaften Ausgestaltung ist der Winkel zwischen der Normalen des Flächenabschnitts und der Normalen der Berührfläche zwischen 5° und 45° groß, insbesondere gleich dem maximalen Auslenkwinkel des Bremshebels. Von Vorteil ist dabei, dass der Winkel im Wesentlichen dem Auslenkwinkel des Bremshebels entspricht, somit sind die Normalen bei ausgelenktem Bremshebel im Wesentlichen parallel und eine Verformung des Bolzens beim Betätigen des Bremshebels ist verhinderbar.

Bei einer vorteilhaften Ausgestaltung ist in der ersten Hebelstellung die Bremsanordnung gelüftet. Von Vorteil ist dabei, dass die Ankerscheibe mittels des Bremshebels an den Magnetkörper gedrückt wird, also der Belagträger ungehindert mitdrehbar ist mit der Rotorwelle.

Bei einer vorteilhaften Ausgestaltung ist die Berührfläche als eine Einkerbung in eine Oberfläche des ersten Hebelabschnitts ausgeführt. Von Vorteil ist dabei, dass die Einkerbung in einfacher Art und Weise fertigbar ist.

Bei einer vorteilhaften Ausgestaltung ist der Bremshebel auf der axial vom Elektromotor abgewandten Seite der Bremse angeordnet ist. Von Vorteil ist dabei, dass der Bremshebel in ein zumindest teilweise geschlossenes Bremsengehäuse, insbesondere Motorgehäuse, integrierbar ist. Somit ist die Bremse vor eindringenden Schmutzpartikeln schützbar und die Betriebssicherheit der Bremse ist verbessert.

Bei einer vorteilhaften Ausgestaltung weist der Bremshebel ein Bedienelement auf. Von Vorteil ist dabei, dass der Hebelarm mittels des Bedienelementes verlängerbar ist. Somit ist der Kraftaufwand beim Auslenken des Bremshebels reduzierbar.

Bei einer vorteilhaften Ausgestaltung ist das Bedienelement mit dem zweiten Hebelabschnitt verbunden, insbesondere lösbar verbunden. Von Vorteil ist dabei, dass das der erste und zweite Hebelabschnitt in radialer Richtung nicht über das Bremsengehäuse hinausragen. Eine unbeabsichtigte Bedienung des Bremshebels ist somit vermeidbar und die Sicherheit der Bremse ist verbessert.

Bei einer vorteilhaften Ausgestaltung weist der zweite Hebelabschnitt eine Gewindebohrung auf, in welche das Bedienelement einschraubbar ist. Von Vorteil ist dabei, dass das Bedienelement in einfacher Art und Weise mit dem zweiten Hebelabschnitt verbindbar ist.

Bei einer vorteilhaften Ausgestaltung ist ein Befestigungsmittel in den Bremshebel einschraubbar, insbesondere zur Verbindung des Bremshebels mit der Bremse. Von Vorteil ist dabei, dass der ausgelenkte Bremshebel entgegen der von den Federelementen aufgebrachten Rückstellkraft an der Bremse fixierbar ist, so dass Wartungsarbeiten ausgeführt werden können, ohne dass der Bremshebel manuell ausgelenkt werden muss.

Wichtige Merkmale der Erfindung bei dem Elektromotor, aufweisend eine Bremsanordnung und eine Rotorwelle, sind, dass ein Bremsbelagträger drehfest aber axial verschiebbar mit der Rotorwelle verbunden ist.

Von Vorteil ist dabei, dass die Sicherheit des Elektromotors verbessert ist. Die Bremsanordnung ermöglicht dabei eine verbesserte Wartung des Elektromotors. Bei einem Defekt an dem Elektromagneten ist die Bremse in einfacher Art und Weise mit geringem Kraftaufwand manuell lüftbar.

Bei einer vorteilhaften Ausgestaltung weist die Rotorwelle zwei axial voneinander beabstandete Mitnehmerverzahnungen auf. Von Vorteil ist dabei, dass zwei Belagträger in dem Elektromotor verwendbar sind, wodurch die Bremskraft erhöht ist und somit ist die Sicherheit des Elektromotors verbessert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erfindungsgemäße Bremsanordnung in Schnittansicht gezeichnet.
Figur 2 zeigt einen Ausschnitt der erfindungsgemäßen Bremsanordnung in Schnittansicht in einem anderen Schnittwinkel als Figur 1.
In der Figur 3 ist ein Ausschnitt der erfindungsgemäßen Bremsanordnung mit einer Handlüftung im geschlossenen Zustand als Schnittansicht gezeigt.
In der Figur 4 ist ein Ausschnitt der erfindungsgemäßen Bremsanordnung mit einer Handlüftung im geöffneten Zustand als Schnittansicht gezeichnet.
Figur 5 zeigt eine Schrägansicht der erfindungsgemäßen Bremsanordnung.

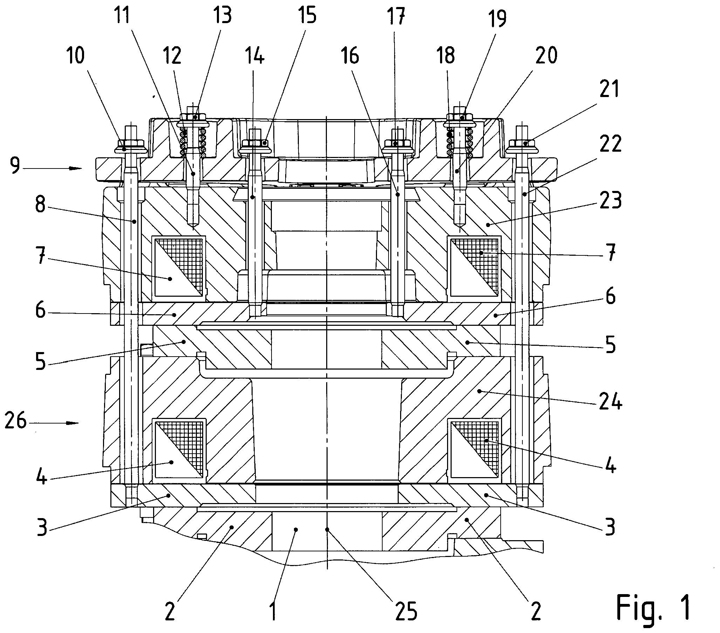

Die in Figur 1 dargestellte erfindungsgemäße Bremse (26) weist zwei Ankerscheiben (3, 6) auf. Eine Ankerscheibe (6) ist zwischen einem Magnetkörper (23) und einem Belagträger (5) axial beweglich angeordnet. Der Magnetkörper (23) weist eine ringförmige Spule (7) auf.

Die axiale Richtung ist hierbei definiert durch eine Drehachse (25) der Bremse (26), insbesondere eine Wellenachse der von der Bremse (26) abzubremsenden Welle (1), insbesondere eine Rotorwellenachse des Elektromotors.

Eine weitere Ankerscheibe (3) ist zwischen einem weiteren Magnetkörper (24) und einem weiteren Belagträger (2) axial beweglich angeordnet. Der weitere Magnetkörper (24) weist eine ringförmige weitere Spule (4) auf.

Die Ankerscheiben (3, 6) sind drehfest gegenüber einer Welle (1) eines nicht dargestellten Motors, vorzugsweise eines Elektromotors, ausgeführt. Dazu sind Führungsbolzen (51, 52) in der Bremse angeordnet, welche sich in axialer Richtung erstrecken. Die Führungsbolzen (51, 52) sind durch nicht dargestellte Bohrungen in den Ankerscheiben (3,6) hindurchgeführt.

Unter Bolzen werden in dieser Schrift auch Stangen verstanden. Alternativ sind statt der Bolzen Schrauben verwendbar, wobei der Schraubkopf als Begrenzungselement fungiert. Die Belagträger (2, 5) weisen auf ihren axialen Seitenflächen jeweils einen Bremsbelag auf, sind also Bremsbelagträger. Die Belagträger (2, 5) sind drehfest aber axial verschiebbar auf der Welle (1) angeordnet. Das Drehmoment wird dabei mittels einer nicht dargestellten Mitnehmerverzahnung übertragen, wobei die Belagträger (2, 5) eine Innenverzahnung aufweisen und ein in die Innenverzahnung einsteckbarer nicht dargestellter Mitnehmer eine Außenverzahnung aufweist. Diese beiden Verzahnungen stehen miteinander im Eingriff und stellen im Wesentlichen eine Zahnkupplung dar.

In axialer Richtung ist die Bremse (26) wie folgt aufgebaut: Motorseitig weist die Bremse (26) ein Gehäuseteil (53) auf, auf dessen dem Motor abgewandter Seite der weitere Belagträger (2) angeordnet ist. Neben dem weiteren Belagträger (2) ist die weitere Ankerscheibe (3) angeordnet. Neben der weiteren Ankerscheibe (3) ist der weitere Magnetkörper (24) angeordnet. Der Belagträger (5) ist zwischen dem weiteren Magnetkörper (24) und der Ankerscheibe (6) angeordnet. Auf der dem Motor abgewandten Seite der Ankerscheibe (6) ist der Magnetkörper (23) angeordnet.

Das Gehäuseteil (53) weist eine Bremsfläche auf, auf welchem der Bremsbelag des weiteren Belagträgers (2) beim Einfallen der Bremse reibt. Dabei wirkt das Gehäuseteil (53) wärmeabführend für die beim Bremsen entstehende Wärme.

Beim Einfallen der Bremse (26), also nach dem Abschalten des Stromes durch die Spulen (4, 7), werden die Ankerscheiben (3, 6) durch in axialer Richtung wirkende Federkraft gegen die Belagträger (2, 5) gedrückt. Die weitere Ankerscheibe (3) drückt dabei den weiteren Belagträger (2) gegen eine nicht dargestellte Reibfläche, so dass der Belagträger (2) mittels seiner beiden Bremsbeläge gebremst wird. Die Ankerscheibe (6) drückt den Belagträger (5) gegen eine Reibfläche auf dem weiteren Magnetkörper (24), so dass der Belagträger (5) mittels seiner beiden Bremsbeläge gebremst wird.

Die auf die Ankerscheiben (3, 6) wirkende Federkraft wird mittels innerhalb der Magnetkörper (24, 23) angeordneter Federelemente (31, 30) bewirkt.

Beim Lüften der Bremse (26), also beim Einschalten des Stromes durch die Spulen (4, 7), wird eine axiale Kraft auf die Ankerscheiben (3, 6) ausgeübt. Diese Kraft ist magnetisch und zieht die Ankerscheiben (3, 6) entgegen der Federkraft an, so dass die Ankerscheiben (3, 6) sich von den Bremsbelägen der Belagträger (2, 5) lösen und sich an den jeweiligen Magnetkörper (24, 23) anlegen. Somit sind die Belagträger (2, 5) frei drehbar und die Welle (1) des Motors dreht sich.

Axial zwischen der weiteren Ankerscheibe (3) und dem weiteren Magnetkörper (24) ist ein Arbeitsluftspalt vorgesehen. Axial zwischen der Ankerscheibe (6) und dem Magnetkörper (23) ist ebenfalls ein Arbeitsluftspalt vorgesehen. Axial zwischen dem Belagträger (5) und dem weiteren Magnetkörper (24) ist ein Arbeitsluftspalt vorgesehen und axial zwischen dem weiteren Belagträger (2) und dem Gehäuseteil (53) ist ein Arbeitsluftspalt vorgesehen.

Die Ankerscheiben (3, 6) und die Magnetkörper (24, 23) sowie das Gehäuseteil (53) weisen jeweils eine radial zentrierte Ausnehmung auf, durch welche die Welle (1) hindurchgeführt ist. Dabei ist die Welle (1) beabstandet von den Wandungen der Ausnehmungen der Ankerscheiben (3,6) und der Magnetkörper (24, 23) sowie des Gehäuseteils (53) angeordnet.

Auf der in axialer Richtung vom Motor abgewandten Seite der Bremse (26) ist ein Bremshebel (9) angeordnet.

Der Bremshebel (9) ist mittels zumindest eines Bolzens (11, 20) mit dem Magnetkörper (23) verbunden. Hierzu weist der Magnetkörper (23) zumindest eine Gewindesacklochbohrung auf, in welche der als Gewindebolzen ausgeführte Bolzen (11, 20) eingeschraubt ist. Der Bremshebel (9) weist zumindest eine axiale Bohrung auf, durch welche der zumindest eine Bolzen (11, 20) hindurchgeführt ist. In axialer Richtung von dem Bremshebel (9) abgewandt ist ein Federelement (12, 18) auf dem Bolzen (11, 20) angeordnet. Dieses Federelement (12, 18) ist dabei axial zwischen dem Bremshebel (9) und zumindest einem Begrenzungselement (13, 19) angeordnet. Dabei ist der Außendurchmesser des Federelementes (12, 18) größer als der Außendurchmesser der Bohrung durch welche der Bolzen (11, 20) hindurchgeführt ist. Außerdem ist der Außendurchmesser des Begrenzungselementes (13, 19) größer als der Außendurchmesser des Federelementes (12, 18).

Die weitere Ankerscheibe (3) ist mit zumindest einem weiteren Bolzen (8, 22) verbunden. Vorzugsweise sind zwei weitere Bolzen (8, 22) vorgesehen, welche sich in axialer Richtung erstrecken und in Umfangsrichtung voneinander beabstandet angeordnet sind. Dabei ist der radiale Abstand zwischen den Bolzen (8, 22) größer als der Außendurchmesser der im Wesentlichen zylindrischen Belagträger (2, 5). Die weiteren Bolzen (8, 22) sind in radialer Richtung weiter von der Drehachse (25) beabstandet als die Belagträger (2, 5).

Die weiteren Bolzen (8, 22) sind drehfest mit der weiteren Ankerscheibe (3) verbunden, vorzugsweise sind die weiteren Bolzen (8, 22) mit der Ankerscheibe (3) schraubverbunden. Dazu ist in der weiteren Ankerscheibe (3) zumindest eine Gewindebohrung vorgesehen, in welche zumindest ein weiterer Bolzen (8, 22) eingeschraubt ist. Alternativ ist der weitere Bolzen (8, 22) mit der weiteren Ankerscheibe (3) vernietet.

Die Ankerscheibe (6) ist mit zumindest einem Bolzen (14, 16) verbunden. Vorzugsweise sind zwei Bolzen (14, 16) vorgesehen, welche sich in axialer Richtung erstrecken und in Umfangsrichtung voneinander beabstandet angeordnet sind. Dabei ist der radiale Abstand zwischen den Bolzen (14, 16) kleiner als der Außendurchmesser der im Wesentlichen zylindrischen Belagträger (2, 5). Die Bolzen (14, 16) sind in radialer Richtung weiter von der Drehachse (25) beabstandet als die Belagträger (2, 5).

Die Bolzen (14, 16) sind drehfest mit der Ankerscheibe (6) verbunden, vorzugsweise sind die Bolzen (14, 16) mit der Ankerscheibe (6) schraubverbunden. Dazu ist in der Ankerscheibe (6) zumindest eine Gewindebohrung vorgesehen, in welche zumindest ein Bolzen (14, 16) eingeschraubt ist. Alternativ sind die Bolzen (14, 16) mit der Ankerscheibe (6) vernietet.

Der Bremshebel (9) weist axiale Bohrungen auf, durch welche die Bolzen (8, 22, 14, 16) hindurchgeführt sind. Ein axialer Endbereich jedes Bolzens (8, 22, 14, 16) weist ein Gewinde auf, mit welchem ein Begrenzungselement (10, 21, 15, 17), welches vorzugsweise eine Mutter umfasst, verschraubt ist. Dabei ist der Außendurchmesser jedes Begrenzungselementes (10, 21, 15, 17) größer als die jeweilige axiale Bohrung im Bremshebel (9).

Die weiteren Bolzen (8, 22) sind durch den weiteren Magnetkörper (24), die Ankerscheibe (6) und den Magnetkörper (23) hindurchgeführt. Dazu weisen der weitere Magnetkörper (24), die Ankerscheibe (6) und der Magnetkörper (23) Bohrungen auf, welche sich in axialer Richtung erstrecken und radial überlappen. Die weiteren Bolzen (8, 22) sind also durch diese Bohrungen hindurchgeführt und erstrecken sich in axialer Richtung von der weiteren Ankerscheibe (3) bis zum Bremshebel (9).

Die Bolzen (14, 16) erstrecken sich in axialer Richtung von der Ankerscheibe (6) bis zum Bremshebel (9). Dazu sind in dem Magnetkörper (23) axiale Bohrungen vorgesehen, durch welche die Bolzen (14, 16) hindurchgeführt sind.

Das Federelement (12, 18) bewirkt eine Rückstellkraft, die in axialer Richtung zum Motor hin auf den Bremshebel (9) wirkt. Diese Rückstellkraft ist beim Betätigen des Bremshebels (9) zu überwinden. Die mittels des Federelementes (12, 18) bewirkte Rückstellkraft ist dabei unabhängig von der ebenfalls in axialer Richtung wirkenden Federkraft der Federelemente (30, 31).

Bei Betätigung des Bremshebels (9) werden die Ankerscheiben (3, 6) in axialer Richtung entgegen der Federkraft der Federelemente (30, 31) gegen den jeweiligen Magnetkörper (23, 24) bewegt, insbesondere werden die Ankerscheiben (3, 6) gegen die Magnetkörper (23, 24) gedrückt. Somit ist die Bremse (26) gelöst und die mit den Belagträgern (2, 5) drehfest verbundene Welle (1) ist frei rotierbar.

Dabei löst der Bremshebel (9) die Ankerscheiben (3,6) unabhängig von dem magnetischen Zustand der Elektromagnete. Die Bremse (26) ist also auch bei unterbrochener Bestromung der Spulen (4, 7) manuell lüftbar. Es genügt also ein einziger Bremshebel (9), um beide Ankerscheiben (3, 6) zu lösen.

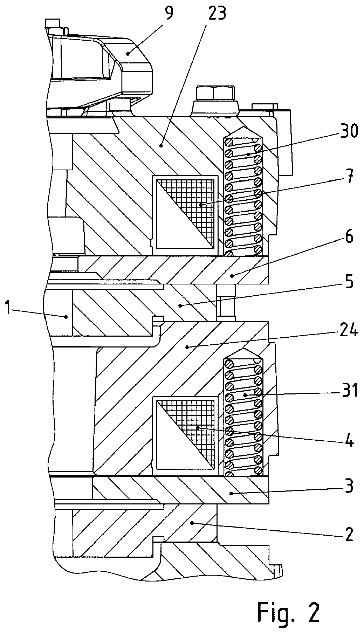

Figur 2 zeigt eine Schnittansicht der Bremse (26) in einem anderen Schrittwinkel als Figur 1, so dass die Federelemente (30, 31), die in den Magnetkörpern (23, 24) angeordnet sind, erkennbar sind. Die Federelemente (30, 31) erstrecken sich in axialer Richtung, so dass ihre Federkraft in axialer Richtung auf die Ankerscheiben (3, 6) wirkt.

Der Magnetkörper (23) weist zumindest eine sich axial erstreckende Ausnehmung auf, in der zumindest ein Federelement (30) angeordnet ist. Die Ausnehmung des Magnetkörpers (23) ist zur Ankerscheibe (6) hin offen ausgeführt. Vorzugsweise ist die Ausnehmung für das Federelement (30) als Sacklochbohrung ausgeführt. Der Radialabstand des Federelementes (30) zur Drehachse (25) ist größer als der Radialabstand der Spule (7) zur Drehachse (25).

Der weitere Magnetkörper (24) weist zumindest eine sich axial erstreckende Ausnehmung auf, in der zumindest ein weiteres Federelement (31) angeordnet ist. Die Ausnehmung des weiteren Magnetkörpers (24) ist zur weiteren Ankerscheibe (3) hin offen ausgeführt. Vorzugsweise ist die Ausnehmung für das weitere Federelement (31) als Sacklochbohrung ausgeführt. Der Radialabstand des weiteren Federelementes (31) zur Drehachse (25) ist größer als der Radialabstand der weiteren Spule (4) zur Drehachse (25).

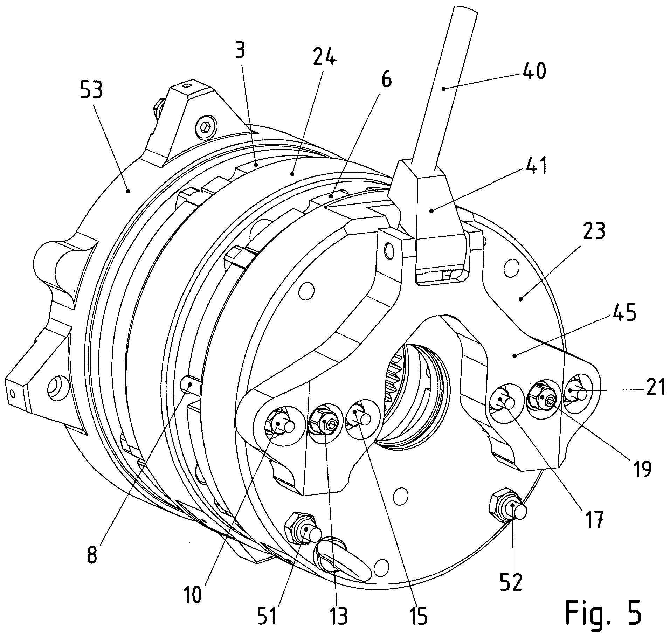

Figur 5 zeigt eine Schrägansicht der erfindungsgemäßen Bremsanordnung. Der Bremshebel (9) weist einen im Wesentlichen U-förmigen ersten Hebelabschnitt (45), einen zum Magnetkörper (23) hin abgewinkelten zweiten Hebelabschnitt (41) und ein Bedienelement (40) auf.

Der im Wesentlichen U-förmige erste Hebelabschnitt (45) weist zwei Schenkelabschnitte und einen Verbindungsabschnitt auf. Ein Endbereich des ersten Schenkelabschnittes weist die Bohrungen auf, durch welche jeweils einer der Bolzen (8, 11, 14) hindurchgeführt ist. Ein Endbereich des zweiten Schenkelabschnittes weist die Bohrungen auf, durch welche jeweils einer der Bolzen (16, 20, 22) hindurchgeführt ist. Diese Bohrungen sind vorzugsweise symmetrisch zueinander in den Endbereichen der Schenkelabschnitte angeordnet.

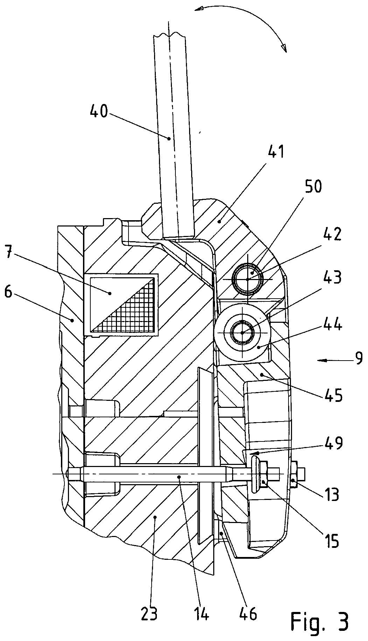

Figur 3 zeigt eine Seitenansicht des Bremshebels (9) mit der Handlüftung im geschlossenen Zustand im Detail. Eine U-förmige Grundfläche des ersten Hebelabschnitts (45) ist im geschlossenen Zustand des Bremshebels (9) im Wesentlichen senkrecht zur Drehachse (25) der Welle (1) angeordnet. Somit ist die Grundfläche des ersten Hebelabschnitts (45) parallel zu einer in axialer Richtung vom Motor abgewandten axialen Seitenfläche der Bremse (26) angeordnet.

Die Länge der mit den Ankerscheiben (3, 6) verbundenen Bolzen (11, 22, 14, 16) ist so gewählt, dass die jeweiligen Begrenzungselemente (10, 21, 13, 15) im geschlossenen Zustand der Handlüftung vom ersten Hebelabschnitt (45) beabstandet sind. Beim Öffnen der Handlüftung berühren die Begrenzungselemente (10, 21, 13, 15) den ersten Hebelabschnitt (45). Der erste Hebelabschnitt (45) weist dabei jeweils im Bereich der Berührfläche jedes Begrenzungselementes (10, 21, 13, 15) eine Einkerbung (49) auf. Die Einkerbung (49) weist dabei einen Winkel zur Grundfläche des ersten Halteabschnitts (45) auf, der kleiner als 90° ist, vorzugsweise kleiner als 45° ist. Insbesondere ist der Winkel zwischen der Einkerbung (49) und der Grundfläche gleich einem maximalen Auslenkwinkel des Bremshebels (9).

Bei einer ersten Hebelstellung ist die Berührfläche des Begrenzungselements (10, 21, 13, 15) also parallel zu einer Unterseite des Begrenzungselements (10, 21, 13, 15) ausgerichtet. Bei einer zweiten Hebelstellung, insbesondere bei geöffneter Handlüftung, ist die Unterseite des Begrenzungselements (10, 21, 31, 15) von der Berührfläche beabstandet und um einen nichtverschwindenden Winkel gedreht zur Berührfläche.

Der Auslenkwinkel des Bremshebels (9) ist dabei der Winkel zwischen der Grundfläche des ersten Hebelabschnitts (45) und der in axialer Richtung vom Motor abgewandten axialen Seitenfläche der Bremse (26).

Der erste Hebelabschnitt (45) ist mittels eines Stiftes (50) mit dem zweiten Hebelabschnitt (41) verbunden. Der Stift (50) definiert dabei eine Stiftachse (42), so dass der zweite Hebelabschnitt (41) also drehbar zum ersten Hebelabschnitt (45) angeordnet ist. Der Stift (50) ist im Verbindungsabschnitt des ersten Hebelabschnitts (45) angeordnet. Der Stift (50) ist durch eine erste Bohrung im ersten Hebelabschnitt (45), durch eine Bohrung im zweiten Hebelabschnitt (41) und durch eine zweite Bohrung im ersten Hebelabschnitt (45) geführt.

Der Verbindungsabschnitt des ersten Hebelabschnitts (45) weist also wiederum zwei Schenkel auf, zwischen welchen der zweite Hebelabschnitt (41) angeordnet ist, wobei der Stift (50) zwischen den Schenkeln und dem zweiten Hebelabschnitt (41) angeordnet ist. Vorzugsweise sind die Endbereiche des Stiftes (50) mit den Schenkeln vernietet. Alternativ sind der erste Hebelabschnitt (45) und der zweite Hebelabschnitt (41) am Stift (50) gleitgelagert, wobei ein nicht dargestelltes Begrenzungselement ein Herausgleiten des Stiftes (50) aus den Hebelabschnitten (41, 45) verhindert.

Der zweite Hebelabschnitt (41) weist zwei Abschnitte auf, die in einem Winkel zueinander angeordnet und einstückig ausgeführt sind. Der Winkel zwischen dem ersten und dem zweiten Abschnitt des zweiten Hebelabschnitts (41) ist größer als 0°, insbesondere zwischen 45° und 120° groß, vorzugsweise zwischen 75° und 100° groß. Der erste Abschnitt des zweiten Hebelabschnitts (41) ist mit dem ersten Hebelabschnitt (45) des Bremshebels (9) mittels des Stiftes (50) verbunden.

Der zweite Abschnitt des zweiten Hebelabschnitts (41) ist mit dem Bedienelement (40) verbunden. Dazu weist der zweite Abschnitt des zweiten Hebelabschnitts (41) eine Bohrung auf, welche vorzugsweise als Gewindebohrung ausgeführt ist. Ein Endbereich des Bedienelements (40) weist ein Außengewinde auf, so dass das Bedienelement (40) in die Gewindebohrung des zweiten Hebelabschnitts (41) einschraubbar ist. Das Bedienelement (40) ist also lösbar mit dem zweiten Hebelabschnitt (41) verbunden.

Das Bedienelement (40) ist vorzugsweise als Stange ausgeführt, wobei die Länge der Stange größer als die axiale Länge der Bremse (26) ist. Vorzugsweise ist in einem nicht dargestellten Kühlkörper des Motors eine Aussparung vorgesehen, welche zur Aufnahme des vom zweiten Hebelabschnitt (41) gelösten Bedienelements (40) geeignet ist.

Vorzugsweise ist das Bedienelement (40) zumindest teilweise hohl ausgeführt. Somit weist der Bremshebel (9) eine Sollbruchstelle im Bedienelement (40) auf, das in einfacher Art und Weise austauschbar ist.

An dem zweiten Hebelabschnitt (41) ist eine Rolle (44) drehbar gelagert. Dazu weißt der zweite Hebelabschnitt (41) zwei Schenkelabschnitte auf, zwischen denen die Rolle (44) zwischengeordnet ist. Ein Stift ist durch Bohrungen in den Schenkelabschnitten und eine zentrierte Bohrung in der Rolle (44) hindurchgeführt. Die Rolle (44) ist also mittels des Stiftes an dem zweiten Hebelabschnitt (41) gelagert.

Die Rolle berührt eine axiale Seitenfläche der Bremse (26). Die Rolle (44) ist dabei axial zwischen dem Magnetkörper (23) und dem ersten Hebelabschnitt (45) angeordnet. In dem ersten Hebelabschnitt (45) ist eine Ausnehmung vorgesehen, welche die Rolle (44) im geschlossenen Zustand des Bremshebels (9) zumindest teilweise umschließt.

Die Bremse (26), insbesondere der Magnetkörper (23) der Bremse (26), weist also einen Oberflächenabschnitt auf, der als Rollfläche für die Rolle (44) geeignet ist, wobei die Rolle (44) einen Bereich der Rollfläche linienhaft berührt. Während der Betätigung des Bremshebels (9) verschiebt sich dieser linienhafte Bereich innerhalb der Rollfläche.

Die Rolle (44) definiert also eine Rollenachse (43), welche parallel zur Stiftachse (42) verläuft. Die Stiftachse (42) und die Rollenachse (43) stehen dabei senkrecht zu Drehachse (25) des Motors.

Die Rolle (44) ist an einem Endbereich des ersten Abschnitts des zweiten Hebelabschnitts (41) angeordnet. Dabei ist die Stiftachse (42) zwischen der Rollenachse (43) und dem zweiten Abschnitt des zweiten Hebelabschnitts (41) angeordnet.

Im geschlossenen Zustand der Handlüftung ist der axiale Abstand zwischen dem ersten Hebelabschnitt (45) und dem Magnetkörper (23) sehr klein, insbesondere kleiner als 1 cm, vorzugsweise kleiner als 5 mm.

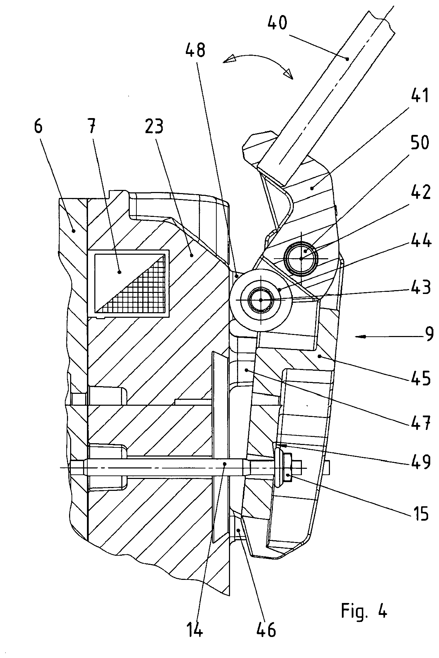

Figur 4 zeigt eine Seitenansicht des Bremshebels (9) mit der Handlüftung im geöffneten Zustand im Detail.
Die axiale Seitenfläche der Bremse (26) weist zumindest ein Auflager (46) auf, auf welchem ein Endbereich des ersten Hebelabschnitts (45) aufliegt. Das Auflager (46) ist vorzugsweise als ein Vorsprung ausgeformt, der in eine nicht dargestellte Vertiefung in dem ersten Hebelabschnitt (45) eingreift. Vorzugsweise ist der Vorsprung einstückig mit dem Magnetkörper (23) ausgeführt.

Die Rollfläche der Bremse weist zumindest zwei Begrenzungsmittel (47, 48) auf, insbesondere welche als Auskragungen einstückig mit dem Magnetkörper (23) ausgeführt sind. Die Begrenzungsmittel (47, 48) begrenzen eine Bewegung der Rolle (44) in radialer Richtung.

Der Bremshebel (9) umfasst also einen ersten und einen zweiten Hebel. Der erste Hebel weist die Stiftachse (42) als Drehpunkt auf, mit dem Bedienelement (40) und dem zweiten Abschnitt des zweiten Hebelabschnitts (41) als Kraftarm und dem ersten Abschnitt des zweiten Hebelabschnitts (41) als Lastarm. Mittels der Rolle (44) wird die Hebelkraft an der Rollenachse (43) umgelenkt. Der zweite Hebel mit dem Auflager (46) als Drehpunkt weist einen Kraftarm mit dem ersten Abschnitt des zweiten Hebelabschnitts (41) und dem ersten Hebelabschnitt (45) und einen Lastarm mit dem Bolzen (8, 14, 16, 22) auf.

In einem weiteren nicht dargestellten Ausführungsbeispiel ist statt des Bedienelementes (40) ein Befestigungsmittel, beispielsweise eine Schraube oder ein Gewindestift, in die Gewindebohrung im zweiten Hebelabschnitt (41) einschraubbar, mittels dieser Schraube ist der Bremshebel (9) feststellbar. Dabei wird das Befestigungsmittel durch die Gewindebohrung hindurch in eine weitere Bohrung in der Bremse (26) eingeschraubt. Insbesondere bei Wartungsarbeiten an der Bremse ist also ein manuelles Lüften der Bremse (26) ermöglicht, ohne dass der Bremshebel (9) vom Anwender mit der Hand festgehalten wird.

In einem weiteren nicht dargestellten Ausführungsbeispiel ist die Bremse mit einem einzigen Belagträger, einer einzigen Ankerscheibe und einem einzigen Elektromagneten ausführbar. Der Bremshebel ist in diesem Ausführungsbeispiel mittels zumindest eines Bolzens mit der Ankerscheibe verbindbar.

In einem weiteren nicht dargestellten Ausführungsbeispiel weist die Bremse (26) kein Gehäuseteil (56) auf, sondern ist direkt an ein Lagerschild des Elektromotors angebaut. Dabei nimmt das Lagerschild ein Lager der Welle (1) des Elektromotors auf. Das Lagerschild weist auf seiner dem Belagträger (2) zugewandten Oberfläche eine Bremsfläche auf, an welcher der Bremsbelag des Belagträgers (2) beim Bremsen reibt. Dabei wirkt das Lagerschild wärmeabführend für die beim Bremsen erzeugte Wärme.

In einem weiteren nicht dargestellten Ausführungsbeispiel weist der erste Hebelabschnitt (41) statt der Rolle (44) eine Gleitfläche auf, die auf dem Magnetkörper (23) der Bremse gleitet.

### Bezugszeichenliste

- 1: Welle
- 2: Belagträger
- 3: Ankerscheibe
- 4: Spule
- 5: Belagträger
- 6: Ankerscheibe
- 7: Spule
- 8: Bolzen
- 9: Bremshebel
- 10: Begrenzungselement
- 11: Bolzen
- 12: Federelement
- 13: Begrenzungselement
- 14: Bolzen
- 15: Begrenzungselement
- 16: Bolzen
- 17: Begrenzungselement
- 18: Federelement
- 19: Begrenzungselement
- 20: Bolzen
- 21: Begrenzungselement
- 22: Bolzen
- 23: Magnetkörper
- 24: Magnetkörper
- 25: Drehachse
- 26: Bremse
- 30: Federteil
- 31: Federteil
- 40: Bedienelement
- 41: zweiter Hebelabschnitt
- 42: Stiftachse
- 43: Rollenachse
- 44: Rolle
- 45: erster Hebelabschnitt
- 46: Auflager
- 47: Begrenzungsmittel
- 48: Begrenzungsmittel
- 49: Einkerbung
- 50: Stift
- 51: Führungsbolzen
- 52: Führungsbolzen
- 53: Gehäuseteil

## Patentansprüche

1. Elektromagnetisch betätigbare Bremsanordnung
wobei die Bremsanordnung eine Ankerscheibe (6) und einen Bremshebel (9) zur manuellen Betätigung der Bremse (26), aufweist, **dadurch gekennzeichnet, dass**
der Bremshebel (9) einen ersten Hebeiabschnitt (45) und einen zweiten Hebelabschnitt (41) aufweist
**wobei am zweiten Hebelabschnitt (41) eine Rolle (44) drehbar gelagert ist,**
**wobei mittels der Rolle (44) der Kraftfluss vom ersten Hebelabschnitt (45) zum zweiten Hebelabschnitt (41) umlenkbar ist.**

2. Bremsanordnung nach **Anspruch 1,**
**dadurch gekennzeichnet, dass**
der erste Hebelabschnitt (45) und der zweite Hebelabschnitt (41) drehbar zueinander angeordnet sind,
und/oder dass
der erste Hebelabschnitt (45) am zweiten Hebelabschnitt (41) drehbar gelagert ist.

3. Bremsanordnung nach mindestens einem der vorangegangenen Ansprüche,
**dadurch gekennzeichnet, dass**
zwischen dem ersten Hebelabschnitt (45) und dem zweiten Hebelabschnitt (41) ein Drehlager umfassend einen Stift (50), zwischengeordnet ist,
wobei der erste Hebelabschnitt (45) und der zweite Hebelabschnitt (41) gleitgelagert sind am Stift (50).

4. Bremsanordnung nach mindestens einem der vorangegangenen Ansprüche,
**dadurch gekennzeichnet, dass**
die Bremse (26) einen Oberflächenabschnitt aufweist, der als Rollfläche für die Rolle (44) geeignet ist, wobei die Rolle (44) einen Bereich der Rollfläche berührt.

5. Bremsanordnung nach mindestens einem der vorangegangenen Ansprüche,
**dadurch gekennzeichnet, dass**
der erste Hebelabschnitt (45) die Oberfläche des Magnetkörpers (23) der Bremse (26), berührt, so dass ein Auflager (46) für den ersten Hebelabschnitt (45) an der Bremse (26) ausgebildet ist,
wobei als Auflager (46) ein am Magnetkörper (23) ausgeformter Vorsprung in eine entsprechende Vertiefung des ersten Hebelabschnitts (45) eingreift und/oder wobei das Auflager (46) einstückig mit dem Magnetkörper (23) ausgeführt ist.

6. Bremsanordnung nach Anspruch 4, **dadurch gekennzeichnet, dass**
die Rollfläche durch zumindest ein Begrenzungsmittel (47, 48) begrenzt ist,

7. Bremsanordnung nach mindestens einem der vorangegangenen Ansprüche,
**dadurch gekennzeichnet, dass**
zumindest ein Bolzen (14, 16) verbunden ist mit der Ankerscheibe (6),
wobei der Bolzen (14, 16) den Abstand der Ankerscheibe (6) zum Magnetkörper (23) mittels eines Begrenzungselementes (15, 17) begrenzt und mit dem Begrenzungselement (15, 17) verbunden, ist,
wobei der Bolzen (14, 16) durch eine durchgehende erste Bohrung im ersten Hebelabschnitt (45) hindurchgeführt ist,
wobei das Begrenzungselement (15, 17) auf der von der Ankerscheibe (6) abgewandten Seite des ersten Hebelabschnitts (45) angeordnet ist,
wobei das Begrenzungselement (15, 17) einen größeren Außendurchmesser als die erste Bohrung aufweist,
wobei der Bolzen (14, 16) durch eine durchgehende Durchgangsbohrung im Magnetkörper (23) hindurchgeführt ist,
wobei der Magnetkörper (23) zwischen der Ankerscheibe (6) und dem ersten Hebelabschnitt (45) angeordnet ist.

8. Bremsanordnung nach mindestens einem der vorangegangenen Ansprüche,
**dadurch gekennzeichnet, dass**
zumindest ein Bolzen (11, 20) mit dem Magnetkörper (23) verbunden ist,
wobei der Bolzen (11, 20) durch eine durchgehende zweite Bohrung im ersten Hebelabschnitt (45) hindurchgeführt ist,
wobei der Bolzen (11, 20) den Abstand des ersten Hebelabschnitts (45) zum Magnetkörper (23) mittels eines Begrenzungselementes (13, 19) und eines zwischen dem Begrenzungselement (13, 19) und dem ersten Hebelabschnitt (45) angeordneten Federelementes (12, 18) begrenzt,
wobei der erste Hebelabschnitt (45) zwischen dem Magnetkörper (23) und dem Federelement (12, 18) angeordnet ist,
wobei das Begrenzungselement (13, 19) einen größeren Außendurchmesser als das Federelement (12, 18) aufweist,
wobei das Federelement (12, 18) einen größeren Außendurchmesser als die zweite Bohrung aufweist.

9. Bremsanordnung nach mindestens einem der vorangegangenen Ansprüche, **dadurch gekennzeichnet, dass**
die Bremsanordnung
- eine Spule (7), die in dem Magnetkörper (23) aufgenommen ist,
- einen Bremsbelagträger, der mittels einer auf einer Welle (1) angeordneten Mitnehmerverzahnung drehfest, und axial bewegbar angeordnet ist,
- und die drehfest mit dem Magnetkörper (23) verbundene, aber axial bewegbar angeordnete Ankerscheibe (6)
aufweist,
wobei die Ankerscheibe (6) von zumindest einem Federteil (30) beaufschlagt ist,
wobei der Bremsbelagträger axial zwischen der Ankerscheibe (6) und einem eine Bremsfläche aufweisenden Teil angeordnet ist.

10. Bremsanordnung nach mindestens einem der vorangegangenen Ansprüche,
**dadurch gekennzeichnet, dass**
die Bremsanordnung eine weitere Ankerscheibe (3) aufweist,
wobei zumindest ein weiterer Bolzen (8, 22) verbunden ist mit der weiteren Ankerscheibe (3),
wobei der weitere Bolzen (8, 22) den Abstand der weiteren Ankerscheibe (3) zu einem weiteren Magnetkörper (24) mittels eines weiteren Begrenzungselementes (10, 21) begrenzt und mit dem weiteren Begrenzungselement (10, 21) verbunden ist,
wobei der weitere Bolzen (8, 22) durch eine durchgehende dritte Bohrung im ersten Hebelabschnitt (45) hindurchgeführt ist,

11. Bremsanordnung nach Anspruch 9,
**dadurch gekennzeichnet, dass**
die Bremsanordnung
- eine weitere Spule (4), die in dem weiteren Magnetkörper (24) aufgenommen ist,
- einen weiteren Bremsbelagträger, der mittels einer auf einer Welle (1) angeordneten weiteren Mitnehmerverzahnung drehfest und axial bewegbar angeordnet ist,
- und die drehfest mit dem weiteren Magnetkörper (24) verbundene, aber axial bewegbar angeordnete weitere Ankerscheibe (3)
aufweist,

12. Bremsanordnung nach mindestens einem der vorangegangenen Ansprüche,
**dadurch gekennzeichnet, dass**
der erste Hebelabschnitt (45) zwei Auflager (46) aufweist,
wobei die Rollfläche in Umfangsrichtung zwischen zwei Auflagern (46) angeordnet ist,

13. Bremsanordnung nach mindestens einem der vorangegangenen Ansprüche,
**dadurch gekennzeichnet, dass**
ein Flächenabschnitt des Begrenzungselementes (10, 15, 17, 21) eine Berührfläche des ersten Hebelabschnitts (45) berührt bei einer ersten Hebelstellung, so dass Berührfläche und Flächenabschnitt parallel ausgerichtet sind,
und wobei der Flächenabschnitt bei einer zweiten Hebelstellung von der Berührfläche beabstandet ist und um einen nichtverschwindenden Winkelwert gedreht ist zur Berührfläche,
wobei die Berührfläche als eine Einkerbung (49) in eine Oberfläche des ersten Hebelabschnitts (45) ausgeführt ist.

14. Bremsanordnung nach mindestens einem der vorangegangenen Ansprüche,
**dadurch gekennzeichnet, dass**
der Bremshebel (9) auf der axial vom Elektromotor abgewandten Seite der Bremse (26) angeordnet ist,
und/oder dass
der Bremshebel (9) ein Bedienelement (40) aufweist,
wobei das Bedienelement (40) mit dem zweiten Hebelabschnitt (41) lösbar verbunden ist,
wobei der zweite Hebelabschnitt (41) eine Gewindebohrung aufweist, in welche das Bedienelement (40) einschraubbar ist,
**oder** wobei ein Befestigungsmittel in den Bremshebel (9) einschraubbar ist, insbesondere zur Verbindung des Bremshebels (9) mit der Bremse (26).

15. Elektromotor, aufweisend eine Bremsanordnung nach mindestens einem der vorangegangenen Ansprüche und eine Rotorwelle, wobei ein Bremsbelagträger drehfest aber axial verschiebbar mit der Rotorwelle verbunden ist,
wobei die Rotorwelle zwei axial voneinander beabstandete Mitnehmerverzahnungen aufweist.

## Claims

1. Electromagnetically actuatable brake arrangement,
the brake arrangement having an armature disc (6) and a brake lever (9) for manual actuation of the brake (26), **characterised in that**
the brake lever (9) has a first lever section (45) and a second lever section (41),
a roller (44) being rotationally mounted on the second lever section (41),
the flow of power being able to be diverted from the first lever section (45) to the second lever section (41) with the aid of the roller (44).

2. Brake arrangement according to claim 1,
**characterised in that**
the first lever section (45) and the second lever section (41) are disposed in a manner allowing rotation relative to each other,
and/or
the first lever section (45) is rotationally mounted on the second lever section (41).

3. Brake arrangement according to at least one of the preceding claims,
**characterised in that**
a pivot bearing, comprising a pin (50), is disposed between the first lever section (45) and the second lever section (41),
the first lever section (45) and the second lever section (41) being supported on the pin (50) by friction bearings.

4. Brake arrangement according to at least one of the preceding claims,
**characterised in that**
the brake (26) has a surface section which is suitable as a rolling surface for the roller (44), the roller (44) contacting an area of the rolling surface.

5. Brake arrangement according to at least one of the preceding claims,
**characterised in that**
the first lever section (45) contacts the surface of the magnet body (23) of the brake (26), so that a support (46) is formed for the first lever section (45) on the brake (26),
as support (46), a protrusion formed on the magnet body (23) engaging with a corresponding depression in the first lever section (45) and/or the support (46) being realised in one piece with the magnet body (23).

6. Brake arrangement according to claim 4,
**characterised in that**
the rolling surface is limited by at least one limiting means (47, 48).

7. Brake arrangement according to at least one of the preceding claims,
**characterised in that**
at least one bolt (14, 16) is connected to the armature disc (6),
the bolt (14, 16) limiting the distance of the armature disc (6) to the magnet body (23) with the aid of a limiting element (15, 17), and being connected to the limiting element (15, 17),
the bolt (14, 16) being passed through a continuous first bore in the first lever section (45),
the limiting element (15, 17) being disposed on the side of the first lever section (45) facing away from the armature disc (6),
the limiting element (15, 17) having a larger outside diameter than the first bore,
the bolt being (14, 16) being passed through a continuous through-bore in the magnet body (23),
the magnet body (23) being disposed between the armature disc (6) and the first lever section (45).

8. Brake arrangement according to at least one of the preceding claims,
**characterised in that**
at least one bolt (11, 20) is connected to the magnet body (23),
the bolt (11, 20) being passed through a continuous second bore in the first lever section (45),
the bolt (11, 20) limiting the distance of the first lever section (45) to the magnet body (23) with the aid of a limiting element (13, 19) and a spring element (12, 18) disposed between the limiting element (13, 19) and the first lever section (45),
the first lever section (45) being disposed between the magnet body (23) and the spring element (12, 18),
the limiting element (13, 19) having a larger outside diameter than the spring element (12, 18),
the spring element (12, 18) having a larger outside diameter than the second bore.

9. Brake arrangement according to at least one of the preceding claims,
**characterised in that**
the brake arrangement
- has a coil (7), which is accommodated in the magnet body (23),
- a brake-pad carrier which is disposed so as to be rotatably fixed with the aid of a driver toothing disposed on a shaft (1), and movable axially,
- and the armature disc (6) is joined in rotatably fixed manner to the magnet body (23), but disposed in a manner allowing axial movement,
the armature disc (6) being acted upon by at least one spring part (30),
the brake-pad carrier being disposed axially between the armature disc (6) and a part having a braking surface.

10. Brake arrangement according to at least one of the preceding claims,
**characterised in that**
the brake arrangement has a further armature disc (3),
at least one further bolt (8, 22) being connected to the further armature disc (3),
the further bolt (8, 22) limiting the distance of the further armature disc (3) to a further magnet body (24) with the aid of a further limiting element (10, 21), and being connected to the further limiting element (10, 21),
the further bolt (8, 22) being passed through a continuous third bore in the first lever section (45).

11. Brake arrangement according to claim 9,
**characterised in that**
the brake arrangement
- has a further coil (4), which is accommodated in the further magnet body (24),
- a further brake-pad carrier which is disposed so as to be rotatably fixed with the aid of a further driver toothing disposed on a shaft (1), and movable axially,
- and the further armature disc (3) joined in a rotatably fixed manner to the further magnet body (24) but disposed in a manner allowing axial movement.

12. Brake arrangement according to at least one of the preceding claims,
**characterised in that**
the first lever section (45) has two supports (46),
the rolling surface being disposed in the circumferential direction between two supports (46).

13. Brake arrangement according to at least one of the preceding claims,
**characterised in that**
in a first lever position, a surface section of the limiting element (10, 15, 17, 21) touches a contact surface of the first lever section (45), so that the contact surface and the surface section are aligned in parallel,
and in a second lever position, the surface section is set apart from the contact surface and is rotated by a non-zero angular value relative to the contact surface,
the contact surface being realised as a notch (49) in a surface of the first lever section (45).

14. Brake arrangement according to at least one of the preceding claims,
**characterised in that**
the brake lever (9) is disposed on the side of the brake (26) facing away axially from the electric motor,
and/or **in that**
the brake lever (9) has an operating element (40),
the operating element (40) being releasably joined to the second lever section (41),
the second lever section (41) having a threaded bore, into which the operating element (40) is able to be screwed into place,
or a fastening means able to be screwed into the brake lever (9), particularly for joining the brake lever (9) to the brake (26).

15. Electric motor, having a brake arrangement according to at least one of the preceding claims and a rotor shaft, a brake-pad carrier being joined in a rotatably fixed but axially displaceable manner to the rotor shaft,
the rotor shaft having two driver toothings set apart axially from each other.

## Revendications

1. Dispositif de freinage à actionnement électromagnétique,
ledit dispositif de freinage comprenant un disque d'induit (6) et un levier de freinage (9) dévolu à l'actionnement manuel du frein (26),
**caractérisé par le fait que**
le levier de freinage (9) comporte un premier segment (45) et un second segment (41),
un galet (44) étant monté à rotation sur ledit second segment (41) du levier,
le flux de force pouvant être dévié, au moyen dudit galet (44), vers ledit second segment (41) du levier à partir du premier segment (45) dudit levier.

2. Dispositif de freinage selon la revendication 1,
**caractérisé par le fait que**
le premier segment (45) du levier et le second segment (41) dudit levier sont agencés avec faculté de rotation l'un par rapport à l'autre,
et/ou **par le fait que**
ledit premier segment (45) du levier est monté à rotation sur ledit second segment (41) dudit levier.

3. Dispositif de freinage selon au moins l'une des revendications précédentes,
**caractérisé par le fait**
**qu'**un palier de rotation, incluant une cheville (50), est interposé entre le premier segment (45) du levier et le second segment (41) dudit levier,
ledit premier segment (45) du levier et ledit second segment (41) dudit levier étant montés sur ladite cheville (50) avec faculté de glissement.

4. Dispositif de freinage selon au moins l'une des revendications précédentes,
**caractérisé par le fait que**
le frein (26) comporte une zone de surface se prêtant adéquatement en tant que surface de roulement dédiée au galet (44), ledit galet (44) étant en contact avec une région de ladite surface de roulement.

5. Dispositif de freinage selon au moins l'une des revendications précédentes,
**caractérisé par le fait que**
le premier segment (45) du levier est en contact avec la surface du corps magnétique (23) du frein (26), ce qui procure, audit premier segment (45) dudit levier, une zone d'appui (46) sur ledit frein (26),
sachant qu'une protubérance matérialisant la zone d'appui (46), ménagée sur ledit corps magnétique (23), pénètre dans un renfoncement correspondant dudit premier segment (45) dudit levier, et/ou sachant que ladite zone d'appui (46) est réalisée d'un seul tenant avec ledit corps magnétique (23).

6. Dispositif de freinage selon la revendication 4,
**caractérisé par le fait que**
la surface de roulement est délimitée par au moins un moyen de délimitation (47, 48).

7. Dispositif de freinage selon au moins l'une des revendications précédentes,
**caractérisé par le fait**
**qu'**au moins une broche (14, 16) est reliée au disque d'induit (6),
sachant que ladite broche (14, 16) délimite la distance dudit disque d'induit (6) vis-à-vis du corps magnétique (23), au moyen d'un élément de délimitation (15, 17), et est reliée audit élément de délimitation (15, 17),
ladite broche (14, 16) étant guidée à travers un premier alésage ininterrompu, pratiqué dans le premier segment (45) du levier,
l'élément de délimitation (15, 17) étant placé du côté dudit premier segment (45) du levier qui pointe à l'opposé dudit disque d'induit (6),
ledit élément de délimitation (15, 17) présentant un diamètre extérieur supérieur à celui dudit premier alésage,
ladite broche (14, 16) étant guidée à travers un alésage traversant pratiqué dans ledit corps magnétique (23),
lequel corps magnétique (23) est placé entre ledit disque d'induit (6) et ledit premier segment (45) du levier.

8. Dispositif de freinage selon au moins l'une des revendications précédentes,
**caractérisé par le fait**
**qu'**au moins un goujon (11, 20) est relié au corps magnétique (23),
ledit goujon (11, 20) étant guidé à travers un deuxième alésage ininterrompu, pratiqué dans le premier segment (45) du levier,
sachant que ledit goujon (11, 20) délimite la distance dudit premier segment (45) du levier vis-à-vis dudit corps magnétique (23), au moyen d'un élément de délimitation (13, 19) et d'un élément élastique (12, 18) placé entre ledit élément de délimitation (13, 19) et ledit premier segment (45) du levier,
lequel premier segment (45) du levier est situé entre ledit corps magnétique (23) et ledit élément élastique (12, 18),
ledit élément de délimitation (13, 19) présentant un diamètre extérieur supérieur à celui dudit élément élastique (12, 18),
lequel élément élastique (12, 18) présente un diamètre extérieur supérieur à celui dudit deuxième alésage.

9. Dispositif de freinage selon au moins l'une des revendications précédentes,
**caractérisé par le fait que**
ledit dispositif de freinage comprend
- une bobine (7) logée dans le corps magnétique (23),
- un support de garniture de freinage agencé, avec verrouillage rotatif et mobilité axiale, au moyen d'une denture d'entraînement située sur un arbre (1),
- et le disque d'induit (6) relié audit corps magnétique (23) avec verrouillage rotatif, mais agencé avec mobilité axiale,
ledit disque d'induit (6) étant sollicité par au moins une pièce élastique (30),
ledit support de garniture de freinage étant placé, dans le sens axial, entre ledit disque d'induit (6) et une partie offrant une surface de freinage.

10. Dispositif de freinage selon au moins l'une des revendications précédentes,
**caractérisé par le fait que**
ledit dispositif de freinage est muni d'un disque d'induit (3) supplémentaire,
au moins une broche supplémentaire (8, 22) étant reliée audit disque d'induit (3) supplémentaire,
sachant que ladite broche supplémentaire (8, 22) délimite la distance dudit disque d'induit (3) supplémentaire vis-à-vis d'un corps magnétique (24) supplémentaire, au moyen d'un élément de délimitation (10, 21) supplémentaire, et est reliée audit élément de délimitation (10, 21) supplémentaire,
ladite broche supplémentaire (8, 22) étant guidée à travers un troisième alésage ininterrompu, pratiqué dans le premier segment (45) du levier.

11. Dispositif de freinage selon la revendication 9,
**caractérisé par le fait que**
ledit dispositif de freinage comprend
- une bobine supplémentaire (4), logée dans le corps magnétique (24) supplémentaire,
- un support supplémentaire de garniture de freinage qui est agencé, avec verrouillage rotatif et mobilité axiale, au moyen d'une denture supplémentaire d'entraînement située sur un arbre (1),
- et le disque d'induit (3) supplémentaire, qui est relié audit corps magnétique (24) supplémentaire avec verrouillage rotatif, mais est agencé avec mobilité axiale.

12. Dispositif de freinage selon au moins l'une des revendications précédentes,
**caractérisé par le fait que**
le premier segment (45) du levier est doté de deux zones d'appui (46),
la surface de roulement étant située entre deux zones d'appui (46), dans la direction périphérique.

13. Dispositif de freinage selon au moins l'une des revendications précédentes,
**caractérisé par le fait**
**qu'**une zone superficielle de l'élément de délimitation (10, 15, 17, 21) touche une surface de contact du premier segment (45) du levier, dans une première position dudit levier, de sorte que ladite surface de contact et ladite zone superficielle sont orientées parallèlement, sachant que, dans une seconde position dudit levier, ladite zone superficielle se trouve à distance de ladite surface de contact et est déjetée d'une valeur angulaire non évanescente, par rapport à ladite surface de contact,
laquelle surface de contact est réalisée sous la forme d'une encoche (49) façonnée dans une surface dudit premier segment (45) dudit levier.

14. Dispositif de freinage selon au moins l'une des revendications précédentes,
**caractérisé par le fait que**
le levier de freinage (9) est implanté du côté du frein (26) qui pointe à l'opposé du moteur électrique, dans le sens axial,
et/ou **par le fait que**
ledit levier de freinage (9) est muni d'un élément d'actionnement (40),
ledit élément d'actionnement (40) étant relié amoviblement au second segment (41) dudit levier,
sachant que ledit second segment (41) du levier présente un trou taraudé dans lequel ledit élément d'actionnement (40) peut être vissé,
ou sachant qu'un moyen de fixation peut être vissé dans le levier de freinage (9), notamment en vue de la liaison dudit levier de freinage (9) avec ledit frein (26).

15. Moteur électrique comprenant un dispositif de freinage conforme à au moins l'une des revendications précédentes, et un arbre rotorique, un support de garniture de freinage étant relié audit arbre rotorique avec verrouillage rotatif, mais avec faculté de coulissement axial,
ledit arbre rotorique étant pourvu de deux dentures d'entraînement distantes l'une de l'autre dans le sens axial.
